# EUROPÄISCHE PATENTANMELDUNG

(11) **EP 1 239 427 A2**
(43) Veröffentlichungstag der Anmeldung: **11.09.2002**
(21) Anmeldenummer: 02100154.0
(22) Anmeldetag: 20.02.2002
(51) Int. Cl.: G07F 7/10

(54) **Schaltungsanordnung sowie Verfahren zum Erkennen einer Zugriffsverletzung bei einer Mikrokontrolleranordnung**

(30) Priorität: 21.02.2001 DE 10108107
(71) Anmelder: Philips Corporate Intellectual Property GmbH, 52066 Aachen (DE); Koninklijke Philips Electronics N.V., 5621 BA Eindhoven (NL)
(72) Erfinder: Buhr, Wolfgang Philips Corp. Int. Property GmbH, 52066, Aachen (DE); Müller, Detlef Philips Corp. Int. Property GmbH, 52066, Aachen (DE); Hagedom, Dieter Philips Corp. Int. Property GmbH, 52066, Aachen (DE)
(74) Vertreter: Volmer, Georg, Dipl.-Ing.

(57) **Zusammenfassung**

Um eine elektrische oder elektronische Schaltungsanordnung (100) sowie ein Verfahren zum Erkennen und/öder zum Identifizieren und/öder zum Aufzeichnen mindestens einer Zugriffsverletzung, insbesondere mindestens einer Speicherzugriffsverletzung, bei einer insbesondere für eine Chipkarte oder Smart Card vorgesehenen Mikrokontrolleranordnung zu schaffen, mit denen bei Auftreten einer Zugriffsverletzung während des Programmablaufs die diese Zugriffsverletzung verursachende Quelle (= sogenannte "break source") sowie die Codeadresse, bei der die Verletzung auftritt, erkannt und/oder identifiziert und/oder aufgezeichnet werden können, wird vorgeschlagen,
- mindestens eine Speichereinheit (10);
- mindestens eine der Speichereinheit (10) zugeordnete Schnittstelleneinheit (20);
- mindestens eine mit der Speichereinheit (10) insbesondere über die Schnittstelleneinheit (20) in Verbindung (30) stehende Prozessoreinheit (60) zum Ausführen von Instruktionscodes, welche Instruktionscodes
   -- mittels mindestens einer Abrufeinheit (40) aus der Schnittstelleneinheit (20) abrufbar sind,
   -- in der Abrufeinheit (40) in mindestens einer Abhol- oder Abrufschlange auflaufen und
   -- zum Abarbeiten der Abhol- oder Abrufschlange mittels mindestens einer der Prozessoreinheit (60) zugeordneten Dekodiereinheit (50) dekodierbar sind, wobei jeder gegebenen Kategorie von Zugriffsverletzung jeweils eine gegebene Kategorie von Zugriffsverletzungscode zuordbar ist, welcher Zugriffsverletzungscode
- an die Stelle des entsprechenden Instruktionscodes tritt und
- Daten sowie Informationen zur Adresse, insbesondere zur Codeadresse, und/oder zur Art und/oder zum Ort und/oder zur Quelle und/oder zum Zeitpunkt der Zugriffsverletzung beinhaltet,
anzuordnen.

## Beschreibung

### Technisches Gebiet

Die vorliegende Erfindung betrifft eine elektrische oder elektronische Schaltungsanordnung sowie ein Verfahren zum Erkennen und/oder zum Identifizieren und/oder zum Aufzeichnen mindestens einer Zugriffsverletzung, insbesondere mindestens einer Speicherzugriffsverletzung, bei einer insbesondere für eine Chipkarte oder Smart Card vorgesehenen Mikrokontrolleranordnung.

### Stand der Technik

Ein derartiges unmittelbares Erkennen und/oder Identifizieren und/oder Aufzeichnen von Zugriffsverletzungen, insbesondere von Speicherzugriffsverletzungen, ist Konventionellerweise nur bei durch Datenspeicherzugriffe bedingten Verletzungen möglich, denn bei dieser Art von Verletzungen besteht ein unmittelbarer zeitlicher Zusammenhang zwischen dem Abarbeiten der Instruktionen und dem Zugriff auf die Datenspeichereinheit oder auf das EEPROM (= electrically erasable programmable read-only memory = elektrisch löschbarer, programmierbarer Festwertspeicher).

Im Gegensatz dazu gibt es allgemein bei Mikrokontrolleranordnungen und insbesondere bei für Chipkarten oder Smart Cards vorgesehenen Mikrokontrolleranordnungen (beispielsweise in Form sogenannter "SXA", das heißt sogenannter "smart extended architecture") keinen festen zeitlichen Zusammenhang zwischen dem Zeitpunkt des Abholens oder Abrufens der Instruktionscodes und dem Zeitpunkt des Ausführens der Instruktionscodes. Diese beiden Vorgänge laufen im Prinzip unabhängig voneinander ab und sind durch den Abhol- oder Abrufschlangenmechanismus lediglich sehr locker miteinander verbunden.

Zugriffsverletzungen, insbesondere Speicherzugriffsverletzungen, werden nun Konventionellerweise durch das Auslösen eines generellen Unterbrechungsvorgangs (sogenannte "break exception") detektiert. Wie vorstehend bereits angedeutet, ist hierbei bei Mikrokontrolleranordnungen und insbesondere bei für Chipkarten oder Smart Cards vorgesehenen Mikrokontrolleranordnungen ein Erkennen der die Zugriffsverletzung verursachenden Speicherquelle sowie der zugehörigen Codeadresse der die Zugriffsverletzung verursachenden Instruktion nicht möglich.

Diese Nichtdiagnostizierbarkeit bzw. Nichtverfolgbarkeit der Ursache(n) für einen generellen Unterbrechungsvorgang ("break exception") hat zur Folge, dass das Betriebssystem der Schaltungsanordnung bei einer Speicherzugriffsverletzung bislang nicht detektieren konnte, welche Speichereinheit die Verletzung ausgelöst hat und welche Instnkion nun genau zur Verletzung geführt hat. Auch die aus den Druckschriften DE 37 36 190 A1, US 5 155 829, US 5 491 827 und US 5 920 690 bekannten Schaltungsanordnungen bzw. Verfahren vermögen diese Probleme nicht zu beheben.

### Darstellung der Erfindung: Aufgabe, Lösung, Vorteile

Ausgehend von den konventionellen Anordnungen liegt der vorliegenden Erfindung die Aufgabe zugrunde, eine elektrische oder elektronische Schaltungsanordnung sowie ein Verfahren der eingangs genannten Art bereitzustellen, mit denen bei Auftreten einer Zugriffsverletzung während des Programmablaufs die diese Zugriffsverletzung verursachende Quelle (= sogenannte "break source") sowie die Codeadresse, bei der die Verletzung auftritt, erkannt und/oder identifiziert und/oder aufgezeichnet werden können.

Diese Aufgabe wird durch die im Anspruch 1 für eine elektrische oder elektronische Schaltungsanordnung angegebenen Merkmale sowie durch die im Anspruch 9 für ein entsprechendes Verfahren angegebenen Merkmale gelöst. Vorteilhafte Ausgestaltungen und zweckmäßige Weiterbildungen der mrliegenden Erfindung sind in den jeweiligen Unteransprüchen gekennzeichnet.

Mithin basiert die Lehre der vorliegenden Erfindung auf speziell definierten und/oder speziell kodierten Zugriffsverletzungscodes, die eine Zugriffsverletzung anzeigen und die wie herkömmliche Instruktionscodes durch die Abhol- oder Abrufschlange geführt oder hindurchgeschoben werden, bevor sich diese Zugriffsverletzungscodes beim Ausführen mittels der Prozessoreinheit dann beispielsweise in Form eines Ausnahmetatbestands ("exception") und/oder in Form einer Verletzungsanzeige ("flag") auswirken.

Hierbei laufen das Abrufen des Instruktionscodes bzw. des Zugriffsverletzungscodes und das Ausführen des Instruktionscodes bzw. des Zugriffsverletzungscodes im wesentlichen zeitlich unabhängig voneinander ab, das heißt "code memory fetch timing" und "instruction execution timing" sind voneinander temporal unabhängig.

Eine derartige Zugriffsverletzung, die im Regelfall beim Abholen oder Abrufen der Instruktionscodes auftritt, wirkt sich hierbei gemäß einer vorteilhaften Ausgestaltungsform der vorliegenden Erfindung nur dann aus, wenn die Codes nach dem Durchlaufen der Abhol- oder Abrufschlange tatsächlich ausgeführt werden. Dies bedeutet mit anderen Worten, dass es zu keiner Verletzung kommt, wenn die Abhol- oder Abrufschlange gelöscht wird, bevor der zu einer Verletzung führende Code ausgeführt wird.

Der Fachmann auf dem Gebiet der elektrischen oder elektronischen Schaltungstechnik wird in bezug auf die vorliegende Erfindung insbesondere zu schätzen wissen, dass die Code-Zugriffsverletzung gerade zum Zeitpunkt des Ausführens des Instruktionscodes bzw des Zugriffsverletzungscodes durch die Prozessoreinheit erkannt wird, das heißt nicht zu dem Zeitpunkt, zu dem der Instruktionscode bzw. der Zugriffsverletzungscode aus der jeweiligen (Code-)Speichereinheit herausgeholt bzw. abgerufen wird (= Zeitpunkt des sogenannten "Code-Fetch"). In diesem Zusammenhang bietet die vorliegende Erfindung den besonders wertvollen Vorteil, dass im Rahmen der Zugriffsverletzung erkennbar ist, aus welcher (Code)Speichereinheit heraus sich diese Zugriffsverletzung ereignet hat.

Für die hierfür speziell definierten Zugriffsverletzungscodes, die eine Zugriffsverletzung anzeigen und die wie herkömmliche Instruktionscodes durch die Abhol- oder Abrufschlange geführt werden, werden gemäß einer besonders erfinderischen Weiterbildung Konventionellerweise ungenutzte "reserved op-codes" als Zugriffsverletzungs(op-)codes definiert bzw. umgewidmet, und zwar zweckmäßigerweise für jede Art von Code-Zugriffsverletzung ein spezieller "op-code".

Tritt nun in einer der (Speicher-)Schnittstelleneinheiten beim sogenannten "Code-Fetch", das heißt beim Abholen bzw. Abrufen der Instruktionscodes eine Zugriffsverletzung auf, so wird anstelle des erwarteten (Speicher-)"op-codes" der jeweilige Zugriffsverletzungs-(op-) code von der (Speicher-)Schnittstelleneinheit in die Abhol- oder Abrufschlange geschickt. Der entsprechende Abhol- oder Abrufschlangeninhalt trägt nun die Daten und Informationen über die Adresse, insbesondere über die Codeadresse, und/oder über die Art und/oder über den Ort und/oder über die Quelle und/oder ürer den Zeitpunkt der Zugriffsverletzung.

Wenn die vorliegende Erfindung in bevorzugter Weise weitergebildet werden soll, so werden die Schaltungsanordnung sowie das der SchaltungLanordnung zugrunde liegende Verfahren so ausgelegt, dass nur dann, wenn der jeweilige Zugriffsverletzungs-(op-)code die Dekodiereinheit erreicht und ausgeführt werden soll, die Dekodiereinheit erkennt, dass sich an dieser Stelle in der Befehlsabfolge eine Code-Zugriffsverletzung ereignet hat. In diesem Falle wird mindestens ein entsprechender Ausnahmetatbestand ("exception") ausgelöst und/oder mindestens eine entsprechende Verletzungsanzeige ("flag") gesetzt.

In einer zweckmäßigen Ausgestaltungsform der vorliegenden Erfindung enthält mindestens ein Quellenregister, insbesondere ein sogenanntes "Break point-source"-Register verschiedene derartige Verletzungsanzeigen (sogenannte "flags"), die in bevorzugter Weise von der Dekodiereiheit gesetzt werden können, wenn die Dekodiereinheit auf einen oder mehrere Zugriffsverletzungs-(op-)codes stößt. Dies bedeutet mit anderen Worten, dass dieses Quellenregister bei Verwirklichung des Ausnahmetatbestands, das heißt bei Vorliegen einer "exception"-Routine dazu dient, die Unterbrechungsquelle (= die sogenannte "break source") oder den Ursprung der Verletzung zu erkennen und/oder zu identifizieren und/oder aufzuzeichnen.

Gemäß einer vorteilhaften Weiterbildung der vorliegenden Erfindung wird bei einem "Clearing" der Abrufeinheit bzw. bei einem Löschen der Abhol- oder Abrufschlange, das zwischenzeitlich, das heißt vor dem Abarbeiten des Zugriffsverletzungscodes erfolgt, auch der Zugriffsverletzungs-(op-)code selbst "gecleart" bzw. gelöscht. Durch dieses zwischen dem Abholen bzw. Abrufen der Codes und dem Abarbeiten der Codes erfolgende Verschwinden des Zugriffsverletzungs-(op-)codes aus der Abhol- oder Abrufschlange wird dann auch kein Ausnahmetatbestand ("exception") ausgelöst und/oder keine Verletzungsanzeige ("flag") gesetzt. Dies bedeutet mit anderen Worten, dass der Abhol- oder Abruf-Schlangenmechanismus nur auf gewissermaßen illegale Abhol- oder Abrufvorgänge anspricht, die auch tatsächlich dekodiert und ausgeführt werden.

Zusammenfassend lässt sich feststellen, dass die vorliegende Schaltungsanordnung sowie das vorliegende Verfahren eine exakte Diagnose einer oder mehrerer (Speicher-) Zugriffsverletzungen durch die "exception"-Routine des Betriebssystems in bezug auf die verursachende Instruktion sowie in bezug auf die verursachende Quelle (= sogenannte "break source") ermöglichen.

Dies ist insbesondere bei Systemen mit hohem Sicherheitsanspruch von Bedeutung, bei denen das Betriebssystem starke, zumeist in den (Speicher-)Schnittstelleneinheiten implementierte Kontroll- und Sicherheitsfunktionen über den auf dem System laufenden Anwendungscode ausübt, das heißt überprüft, ob eine oder mehrere (Speicher-) Zugriffsverletzungen erfolgt sind. In diesem Falle kann zum Zeitpunkt des Ausführens des illegalen Codes mittels der Prozessoreinheit die tatsächliche Codeadresse der Instruktion, die zur Störung führte, gespeichert werden; hierdurch wird das Betriebssystem in die Lage versetzt, einen Fehlerbericht zu erstellen und/oder die Störung sowie - wichtiger noch - deren Ursache zu beseitigen.

### Kurze Beschreibung der Zeichnungen

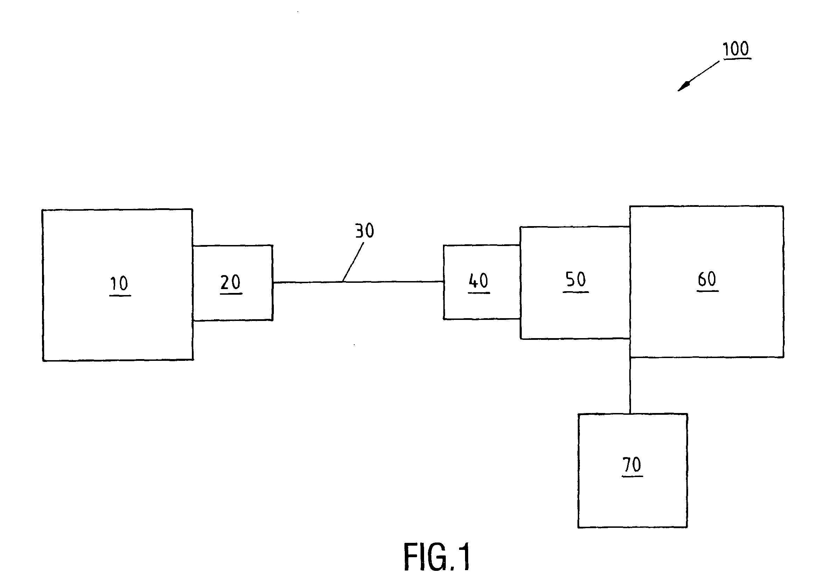

Weitere Ausgestaltungen, Merkmale und Vorteile der vorliegenden Erfindung werden nachstehend anhand des durch Figur 1 veranschaulichten Ausführungsbeispiels näher erläutert.

Es zeigt:
- Fig. 1: ein Ausführungsbeispiel einer Schaltungsanordnung gemäß der vorliegenden Erfindung in schematischer Prinzipdarstellung.

### Bester Weg zur Ausführung der Erfindung

Die in Figur 1 dargestellte, in eine Chipkarte oder Smart Card zu implementierende und zu integrierende elektronische Schaltungsanordnung 100 dient zum Erkennen und/oder zum Identifizieren und/oder zum Aufzeichnen mindestens einer Zugriffsverletzung, insbesondere mindestens einer Speicherzugriffsverletzung.

Hierzu weist die Schaltungsanordnung 100 eine Speichereinheit 10 auf, die mit einer Schnittstelleneinheit 20 versehen ist. Mittels einer Verbindungsleitung 30 ist die Speichereinheit 10 über die Schnittstelleneinheit 20 an eine Prozessoreinheit 60 zum Ausrühren von Instruktionscodes angeschlossen. Diese Instruktionscodes sind mittels einer Abrufeinheit 40 aus der Schnittstelleneinheit 20 abrufbar und laufen in der Abrufeinheit 40 in einer Abholoder Abrufschlange auf; zum Abarbeiten der Abhol- oder Abrufschlange sind diese Instruktionscodes mittels einer der Prozessoreinheit 60 zugeordneten Dekodiereinheit 50 dekodierbar.

Eine Besonderheit der Schaltungsanordnung 100 sowie des der Schaltungsanordnung 100 zugrunde liegenden Verfahrens ist nun darin zu sehen, dass jeder gegebenen Kategorie von Zugriffsverletzung jeweils eine gegebene Kategorie von Zugriffsverletzungscode zuordbar ist; dieser Zugriffsverletzungscode tritt an die Stelle des entsprechenden Instruktionscodes und beinhaltet Daten sowie Informationen zur Adresse, insbesondere zur Codeadresse, und/oder zur Art und/oder zum Ort und/oder zur Quelle und/oder zum Zeitpunkt der Zugriffsverletzung.

Bei der Schalrungsanordnung 100 gemäß dem anhand Figur 1 veranschaulichten Ausführungsbeispiel gehen das Abrufen des Instruktionscodes und das Ausrühren des Instruktionscodes zeitlich unabhängig voneinander vonstatten; folglich wird die Zugriffs verletzung nicht bereits beim Abrufen des Instruktionscodes, sondern erst beim Ausführen des Instruktionscodes angezeigt. Im Einzelfall kann dies auch bedeuten, dass bei einem Löschen der Abhol- oder Abrufschlange vor dem Abarbeiten des Zugriffsverletzungscodes auch der Zugriffsverletzungscode in erwünschter Weise gelöscht wird.

Des weiteren impliziert die temporale Trennung von Abrufen des Instruktionsoodes und Ausführen des Inshuktionscodes auch, dass die Zugriffsverletzung zum Zeitpunkt des Ausrührens des Zugriffswerletzuncodes erkannt und/oder identifiziert und/oder aufgezeichnet wird. Sogesehen wird erst beim Ausführen des Zugriffsverletzungscodes ein Ausnahmetatbestand (= sogenannte "exception" -Routine) erzeugt und eine Verletzungsanzeige (= sogenannte "flag") von der Dekodiereinheit 50 gesetzt.

In diesem Zusammenhang werden der Ausnahmetatbestand und die Verletzungsanzeige durch ein der Dekodiereinheit 50 zugeordnetes Quellenregister 70 bereitgestellt, durch das die Adresse, im speziellen die Codeadresse, die Art, der Ort, die Quelle und der Zeitpunkt der Zugriffsverletzung identifiziert werden können.

### BEZUGSZEICHENUSTE

- 100: Schaltungsanordnung
- 10: Speichereinheit
- 20: Schnittstelleneinheit
- 30: Verbindung zwischen Speichereinheit 10 und Prozessoreinheit 60
- 40: Abrufeinheit
- 50: Dekodiereinheit
- 60: Prozessoreinheit
- 70: Quellenregister

## Patentansprüche

1. Elektrische oder elektronische Schaltungsanordnung (100) zum Erkennen und/oder zum Identifizieren und/oder zum Aufzeichnen mindestens einer Zugriffsverletzung, insbesondere mindestens einer Speicherzugriffsverletzung, bei einer insbesondere für eine Chipkarte oder Smart Card vorgesehenen Mikrokontrolleranordnung, aufweisend
- mindestens eine Speichereinheit (10);
- mindestens eine der Speichereinheit (10) zugeordnete Schnittstelleneinheit (20);
- mindestens eine mit der Speichereinheit (10) insbesondere über die Schnittstelleneinheit (20) in Verbindung (30) stehende Prozessoreinheit (60) zum Ausführen von Instruktionscodes, welche Instruktionscodes
-- mittels mindestens einer Abrufeinheit (40) aus der Schnittstelleneinheit (20) abrufbar sind,
-- in der Abrufeinheit (40) in mindestens einer Abhol- oder Abrufschlange auflaufen und
-- zum Abarbeiten der Abhol- oder Abrufschlange mittels mindestens einer der Prozessoreinheit (60) zugeordneten Dekodiereinheit (50) dekodierbar sind, wobei jeder gegebenen Kategorie von Zugriffsverletzung jeweils eine gegebene Kategorie von Zugriffsverletzungscode zuordbar ist, welcher Zugriffsverletzungscode
- an die Stelle des entsprechenden Instruktionscodes tritt und
- Daten sowie Informationen zur Adresse, insbesondere zur Codeadresse, und/oder zur Art und/oder zum Ort und/oder zur Quelle und/oder zum Zeitpunkt der Zugriffsverletzung beinhaltet.

2. Schaltungsanordnung (100) gemäß Anspruch 1,
**dadurch gekennzeichnet,**
**dass** das Abrufen des Instruktionscodes und das Ausführen des Instruktionscodes zeitlich unabhängig voneinander sind, insbesondere dass die Zugriffsverletzung nicht beim Abrufen
des Instruktionscodes, sondern erst beim Ausführen des Instruktionscodes anzeigbar ist.

3. Schaltungsanordnung (100) gemäß Anspruch 1 oder 2,
**dadurch gekennzeichnet**
**dass** bei Löschen der Abhol- oder Abrufschlange vor dem Abarbeitenden Zugriffsver letzungscodes auch der Zugriffsverletzungscode löschbar is

4. Schaltungsanordnung (100) gemäß mindestens einem der Ansprüche 1 bis 3,
**dadurch gekennzeichnet,**
**dass** die Zugriffsverletzung zum Zeitpunkt des Ausführens des Zugriffsverletzungscodes erkennbar und/oder identifizierbar und/oder aufzeichenbar ist.

5. Schaltungsanordnung (100) gemäß mindestens einem der Ansprüche 1 bis 4,
**dadurch gekennzeichnet,**
**dass** beim Ausführen des Zugriffsverletzungscodes mindestens ein Ausnahmetatbestand ("exception"-Routine) erzeugbar und/oder
mindestens eine Verletzungsanzeige ("flag") von der Dekodiereinheit (50) setzbar ist.

6. Schaltungsanordnung(100) gemäß Anspruch 5,
**dadurch gekennzeichnet,**
**dass** der Ausnahmetatbestand und/oder die Verletzungsanzeige durch mindestens ein Quellenregister (70) bereitstellbar ist.

7. Schaltungsanordnung (100) gemäß Anspruch 6,
**dadurch gekennzeichnet,**
**dass** das Quellenregister (70) der Dekodiereinheit (50) zugsordnet ist.

8. Schaltungsanordnung (100) gemäß Anspruch 6 oder 7,
**dadurch gekennzeichnet,**
**dass** die Adresse, insbesondere die Codeadresse, und/oder die Art und/oder der Ort und/oder die Quelle und/oder der Zeitpunkt der Zugriffsverletzung durch das Quellenregister (70) identifizierbar ist.

9. Verfahren zum Erkennen und/oder zum Identifizieren und/oder zum Aufzeichnen mindestens einer Zugriffsverletzung insbesondere mindestens einer Speicherzugriffsverletzung bei einer insbesondere für eine Chipkarte oder Smart Card vorgesehenen Mikrokontrolleranordnung, aufweisend die folgenden Schritte:
(a) Abrufen von Instruktionscodes aus mindestens einer Speichereinheit (10) zugeordneten Schnittstelleneinheit (20) mittels mindestens einer Abrufeinheit (40);
(b) Auflaufen der Instruktionscodes in der Abrufeinheit (40) in mindestens einer Abholoder Abrufschlange;
(c) Abarbeiten der Abhol- oder Abrufschlange in Form von Dekodieren der Instruktionscodes mittels mindestens einer mindestens einer Prozessoreinheit (60) zugeordneten Dekodiereinheit (50);
(d) Ausführen der Instruktionscodes mittels der mit der Speichereinheit (10) insbesondere über die Schnittstelleneinheit (20) in Verbindung (30) stehenden Prozessoreinheit (60);
wobei jeder gegebenen Kategorie von Zugriffsverletzung jeweils eine gegebene Kategorie von Zugriffsverletzungscode zugeordnet wird,
der Instruktionscode durch den entsprechenden Zugriffsverletzungscode ersetzt wird und Daten sowie Informationen zur Adresse, insbesondere zur Codeadresse, und/oder zur Art und/oder zum Ort und/oder zur Quelle und/oder zum Zeitpunkt der Zugriffsverletzung mittels des Zugriffsverletzungscodes transportiert werden.

10. Verfahren gemäß Anspruch 9,
**dadurch gekennzeichnet,**
**dass** der Instruktionscode zeitlich unabhängig voneinander abgerufen und ausgeführt wird, insbesondere dass die Zugriffsverletzung nicht beim Abrufen des Instruktionscodes, sondern erst beim Ausführen des Instruktionscodes angezeigt wird.

11. Verfahren gemäß Anspruch 9 oder 10,
**dadurch gekennzeichnet,**
**dass** bei Löschen der Abhol- oder Abrufschlange vor dem Abarbeiten des Zugriffsverletzungscodes auch der Zugriffsvedetzungscode gelöscht wird.

12. Verfahren ganäß mindestens einem der Ansprüche 9 bis 11,
**dadurch gekennzeichnet,**
**dass** die Zugriffsverletzung zum Zeitpunkt des Ausführens des Zugriffsverletzungscodes erkannt und/oder identifiziert und/oder aufgezeichnet wird.

13. Verfahren gemäß mindestens einem der Ansprüche 9 bis 12,
**dadurch gekennzeichnet,**
**dass** beim Ausrühren des Zugriffsverletzungscodes mindestens ein Ausnahmetatbestand ("exception"-Routine") erzeugt und/oder mindestens eine Verletzungsanzeige ("flag") von der Dekodiereinheit (50) gesetzt wird.

14. Verfahren gemäß Anspruch 13,
**dadurch gekennzeichnet**,
daas der Ausnahmetatbestand und/oder die Verletzungsanzeige durch mindestens ein insbesondere der Dekodiereinheit (50) zuordbares Quellenregister (70) bereitgestellt wird.

15. Verfahren gemäß Anspruch 14,
**dadurch gekennzeichnet,**
**dass** die Adresse, insbesondere die Codeadresse, und/oder die Art und/oder der Ort und/oder die Quelle und/oder der Zeitpunkt der Zugriffsverletzung durch das Quellenregister (70) identifiziert wird.
